# EUROPÄISCHE PATENTSCHRIFT

(11) **EP 1 972 476 B1**
(45) Veröffentlichungstag und Bekanntmachung des Hinweises auf die Patenterteilung: **27.01.2010**
(21) Anmeldenummer: 08004511.5
(22) Anmeldetag: 12.03.2008
(51) Int. Cl.: B60H 1/34

(54) **Luftausströmer mit Drallströmung und gerichteter Strömung**
Air ducts with vortex flow and directed flow
Extracteur d'air avec écoulement giratoire et flux dirigé

(30) Priorität: 20.03.2007 DE 102007013868
(43) Veröffentlichungstag der Anmeldung: 24.09.2008
(73) Patentinhaber: Behr GmbH & Co. KG, 70469 Stuttgart (DE)
(72) Erfinder: Benamira, Salah, 70180 Stuttgart (DE)

(56) Entgegenhaltungen:
- EP-A- 1 800 918
- DE-A1-102005 036 159
- GB-A- 1 277 184

## Beschreibung

Die Erfindung betrifft einen Luftausströmer, insbesondere für eine Klimatisierung eines Fahrzeuginnenraumes.

Im Stand der Technik sind Luftausströmer in diversen Varianten bekannt. Sie dienen dazu, im Fahrzeuginnenraum schnell ein angenehmes Klima zu schaffen. Es ist ihre Aufgabe, zu diesem Zweck genügend Luft in den Innenraum zu befördern.

So beschreibt die DE 100 36 776 A1 eine Einrichtung zur Klimatisierung eines Innenraumes, insbesondere eine Fahrzeug-Klimatisierungseinrichtung, mit einem Klimagerät mit einer Klimaluft-Führung, sowie mit einem Luftheizgerät mit einer Heizluft-Führung. Die Klimaluft-Führung und die Heizluft-Führung sind mit dem Innenraum verbunden und über ein Mündungsstück in Form einer Doppeldüse zusammengeführt, welche ein Innenrohr und ein konzentrisches Außenrohr aufweist. Dabei kann im Ringraum zwischen dem Innenrohr und Außenrohr eine Drallströmungs-Leiteinrichtung vorgesehen sein, die vorzugsweise einstellbar ist. Bei dieser Einrichtung handelt es sich um einen zweikanaligen Luftausströmer mit einem inneren Luftführungskanal für einen konzentrierten Luftstrahl (auch Spotbereich genannt) und einem äußeren Luftführungskanal für eine Drallströmung (auch Diffusbereich genannt). In vollständig geöffneter Stellung hat der Diffusbereich einen hohen Druckabfall und eine starke Geräuschentwicklung. Die Effizienz des Spotbereichs wird dadurch reduziert.

Die DE 299 14 962 U1 beschreibt einen einkanaligen Luftausströmer, insbesondere für eine Kraftfahrzeuglüftung, mit einem Drallgeber, der mehrere Leitschaufeln hat die jeweils um eine Schwenkachse verschwenkbar sind. Die Schwenkachsen sind etwa radial um eine gemeinsame Zentralachse angeordnet, wobei eine Drehbewegung der Zentralachse als Schwenkbewegung auf die Schwenkachsen der Leitschaufeln übertragbar ist. Die den Leitschaufeln zugeordneten Schwenkachse sind jeweils mit einem Reib- oder Zahnrad drehfest verbunden, weiche mit einem zentralen Reib oder Zahnrad der Zentralachse in Antriebsverbindung stehen. Die Zentralachse trägt an ihrem abströmseitigen Achsende eine manuell betätigbare Drehhandhabe. Bei diesem Luftausströmer kann aufgrund der geringen Tiefe und geringen Ablenkungswirkung des Draligebers nur eine Strömung mit schwachem Drall erzeugt werden.

Aus der EP 0 936 091 B1 ist ein Luftausströmer bekannt, bei welchem eine Leitrampe in Spiral- oder Helixform vorgeschlagen wird. Diese bewirkt eine Strömung mit starkem Drall und damit eine größere Verteilung des in ihr geführten Luftstroms in Art eines Diffusbereiches. Durch die konstante Drallströmung im Diffusbereich dieses Luftausströmers ist jedoch eine Anpassung der Klimatisierungswirkung an jewellige Umgebungsbedingungen nicht moglich.

Aus der DE 10 2005 036 159 A1, der den nächstliegenden Stand der Technik darstellt, ist eine weitere Luftstromsteuereinheit bekant, welche mehrere bewegliche Luftleitelemente zur Erzeugung einer konzentrischen Luftströmung und wenigstens einer drallartigen Strahlaufspreizung aufweist, wobei die wenigstens eine drallartige Luftströmung stufenlos eingestellt werden kann.

Der Erfindung liegt die Aufgabe zugrunde, einen Luftausströmer der eingangs genannten Art anzugeben, welcher bei einfachem Aufbau eine Anpassung einer Klimatisierungswirkung erlaubt, wobei ein breiter Variationsbereich der Anpassung möglich sein soll.

Die Aufgabe wird erfindungsgemäß gelöst durch einen Luftausströmer zum Ausströmen eines Luftstroms, insbesondere in einen Fahrzeuginnenraum, nach den Merkmalen des Anspruchs 1. Der erfindungsgemäße Luftausströmer weist mindestens einen Luftührungskanal und mindestens ein darin angeordneten Luftleitelement in der Art eines Schaufelkranzes aus mit mindestens einer Schaufel, wobei jede der Schaufeln aus mindestens zwei axial hintereinander angeordneten Segmenten gebildet ist, die zwischen einer einen Modus "Diffus" bewirkenden Stellung und einer einen Modus "Gesamtluft" bewirkenden Stellung mit einem axial variabel einstellbaren Strömungsquerschnitt des Luftführungskanals zumindest relativ zueinander angular verstellbar sind. Durch einen derartig axial variabel einstellbaren Strömungsquerschnitt ist eine mehrfunktionale, insbesondere bi-funktionale Düse mit dem Modus "Diffus" mit einer diffusen Strömung oder Drallströmung und dem Modus "Gesamtluft" mit einer weitgehend konventioneller, insbesondere gleich gerichteter Strömung (auch Spotströmung genannt) ermöglicht.
In einer möglichen Ausführungsform sind die Segmente zwischen der den Modus "Diffus" bewirkenden Stellung, in der sie den Strömungsquerschnitt bei maximaler Verdrallung des Luftstroms maximal verringern und der den Modus "Gesamtluft" bewirkenden Stellung, in der sie den Strömungsquerschnitt bei minimaler Verdrallung des Luftstroms minimal verringern, zumindest relativ zueinander angular verstellbar. Dabei sind die Segmente der Schaufeln in der Stellung mit dem minimal verringerten Strömungsquerschnitt in axialer Ausrichtung des Luftausströmers weitgehend identisch übereinander angeordnet, so dass sich strömungsausgangsseitig eine weitgehend gerichtete Strömung ergibt.

In der anderen Stellung mit dem maximal verringerten Querschnitt, sind die Segmente jeweils einer Schaufel derart zueinander angular verstellbar, dass sich eine fächerartige Luftleitfläche in Strömungsrichtung bildet. Mittels der fächerartigen Luftleitfläche wird die Luftströmung in Querrichtung zur Kanallängsachse umgelenkt und somit verdrallt. Solange die verdrallte Luftströmung den Luftführungskanal durchfließt, wirken die Kanalwände entgegen der Zentrifugalkraft der verdrallten Luftströmung. Am Luftströmerausgang platzt die Luftströmung in radialer Richtung auf und strömt diffus in den Fahrzeuginnenraum. Somit stellt sich strömungsausgangsseitig am Luftausströmer eine Drall- oder Turbulenzströmung ein. Die angular verstellten Segmente der Schaufel können alternativ auch eine flügelartige oder helixförmige oder spiralförmige oder wendelförmige Luftleitfläche bilden. Die Segmente der jeweiligen Schaufel sind darüber hinaus zwischen den genannten Stellungen (auch als Endstellungen oder Anschlagstellungen bezeichnet) in eine beliebige Zwischenposition stellbar. Vorzugsweise ist der Schaufelkranz kurz vor dem Luftströmerausgang angeordnet. Bedingt durch den Schaufelkranz wird die Luftströmung nur über einen kurzen Weg verdrällt, wodurch die Luftströmung vorher keine großen Umlenkungen erfährt und dadurch weniger Druckverlust aufweist. Durch die Nutzung eines größeren Querschnitts und die Verdrallung der Luftströmung auf kürzerem Wege ergeben sich zudem geringere benetzte Flächen und geringere Strömungsgeschwindigkeiten. Daraus resultieren wiederum geringere Druckverluste und ein besseres akustisches Verhalten.

Zweckmäßigerweise sind die Segmente konzentrisch um die Längsachse des Luftausströmers gelagert. Insbesondere sind die Segmente zentriert um den Umfang eines inneren Kanals oder eines geschlossenen Zylinders angeordnet. Dabei kann das Luftleitelement aus einer einzelnen, mehrere Segmente umfassenden helixförmigen Schaufel gebildet sein. Alternativ kann das Luftleitelement aus mehreren konzentrisch um die Längsachse des Luftausströmers angeordneten Schaufeln und deren fächerartig oder helixförmig variabel einstellbaren Segmenten gebildet sein. In einer weiteren alternativen Ausführungsform kann durch mehrere in Längsausdehnung des Luftausströmers nacheinander angeordnete Schaufelkränze eine Mehrfach-Helix gebildet werden. Im Detail wird zum Erzeugen einer einstellbaren Drall-oder Diffusströmung das Luftleitelement, d.h. insbesondere die Schaufeln des oder der Schaufelkränze entsprechend verstellt, so dass mindestens eine Helix gebildet ist. Im Sinne der Erfindung kommt als Helix für den Schaufelkranz jede sich rotierend in die Tiefe des Raumes des Luftausströmers fortsetzende Struktur in Betracht. Eine solche Struktur kann insbesondere fächerartig, spiralförmig oder als schraubenförmige Wendel ausgebildet sein.

In einer möglichen Ausführungsform ist der Luftführungskanal als ein Ringkanal oder Ringrohr ausgebildet, der bzw. das als äußerer Luftführungskanal einen weiteren, inneren Luftführungskanal umgibt und parallel zu diesem verläuft. Dabei sind die beiden Luftführurtgskanäle zylindrisch und koaxial ausgebildet. Mit anderen Worten: Ein äußerer, ringförmiger Luftführungskanal umgibt einen inneren, zylinderförmigen Luftführungskanal. Auf diese Weise ist ein zweikanaliger Luftausströmer mit einem äußeren Luftführungskanal mit Schaufelkranz mit einstellbarer Fächer- oder Helix-Form für den Modus "Diffus" und "Gesamtluft" und mit einem inneren Luftführungskanal für einen Modus "gerichtete Strömung" realisierbar. Somit sind gleichzeitig verschiedene Belüftungsarten, z. B. eine spotförmige Belüftung und eine diffuse Belüftung, ermöglicht. Durch den verringerten Druckabfall bei einer diffusen Belüftung kann eine höhere Effizienz der Belüftung erreicht werden. Darüber hinaus ist eine einfache Montage und Herstellung durch Zusammensetzen von schalenförmigen, insbesondere halb- oder viertelschaligen Komponenten, z. B. halbschaligen oder viertelschaligen Gehäuseteile, in welchen die ringförmigen Scheibenelementen aufeinander stapelbar angeordnet sind, ermöglicht.

Zweckmäßigerweise sind die Segmente bei einer zweikanaligen Ausführungsform des Luftausströmers konzentrisch um den inneren Luftführungskanal gelagert.

Erfindungsgemäß sind die Segmente jeweils als ein Scheibenelement ausgebildet, welches aus mindestens einem Ringelement gebildet ist, das eine der Anzahl der Schaufeln entsprechende Anzahl von radial angeordneten Stegen aufweist.

Dabei kann das Ringelement in einer möglichen Ausführungsform als ein inneres Ringelement mit mindestens einem radial nach außen weisenden Steg bei einer einzelnen Schaufel oder mit mehreren Stegen bei mehreren Schaufeln ausgebildet sein. Alternativ kann das jeweilige Scheibenelement aus einem inneren Ringelement und einem konzentrisch um dieses angeordneten äußeren Ringelement gebildet sein, zwischen denen mindestens ein Steg oder mehrere Stege radial angeordnet sind.

Zur Bildung der fächerartigen Luftleitfläche aus den Segmenten einer Schaufel durch deren entsprechenden Stellung erfindungsgemäß ist das jeweilige innere Ringelement mit einer Ausnehmung versehen, in welche ein Stift des inneren Ringelementes des axial in Strömungsrichtung nachfolgenden Segmentes zwischen der den Modus "Diffus" bewirkenden Stellung und der den Modus "Gesamtluft" bewirkenden Stellung angular verstellbar ist. Hierzu sind die Segmente insbesondere aus weitgehend identischen Scheibenelementen gebildet, die im zusammengesetzten Zustand übereinander angeordnet sind.

Vorzugsweise sind die axial in Strömungsrichtung aufeinander gesetzten Segmente mittels eines Betätigungselementes oder Verstellelements synchron verstellbar, insbesondere verdrehbar. Hierbei werden die Segmente durch gleichzeitige Verstellung, insbesondere angulare Verdrehung zwischen der einen, eine fächerartige Luftleitfläche bildenden Stellung (= Modus "Diffus") und der anderen, eine weitgehend geradlinige Luftleitfläche bildenden Stellung (= Modus "Gesamtluft") angular verdreht.

Zweckmäßigerweise ist das Betätigungselement mittig auf das axial in Strömungsrichtung letzte Segment aufsetzbar und als ein Betätigungs- oder Verstellring ausgebildet. Durch die über Ausnehmung und Stift axial miteinander in Verbindung stehenden Segmente einer Schaufel und Verstellen, insbesondere Verdrehen des letzten Segmentes mittels des Betätigungselementes sind die Segmente zueinander angular verstellbar, so dass im Modus "Diffus" eine fächerartige Luftleitfläche oder im Modus "Gesamtluft" eine weitgehend geradlinige Luftleitfläche gebildet ist.

Hierbei kann das Betätigungselement beispielsweise mit Stiften versehen sein, die in Ausnehmungen des letzten Segmentes des beweglichen Schaufelkranzes eingreifen und in diesen zur Vermeidung einer Verkantung arretierbar sind. Darüber hinaus weist das Betätigungselement strömungsausgangsseitig einen geformten Rand aufweist, der beispielsweise mit einer entsprechenden Struktur, z.B. Greifstruktur, versehen ist, die ein einfaches Bedienen ermöglicht. Zusätzlich kann das Betätigungselement strömungsausgangsseitig mit festen oder verstellbaren Streben oder Lamellen versehen sein. Diese dienen insbesondere der Versteifung des ringförmigen Betätigungselementes.

In einer weiteren Ausführungsform ist zwischen dem Betätigungselement und dem letzten Segment ein Federelement angeordnet. Hierdurch wird sichergestellt, dass im zusammengesetzten und arretierten Zustand des Betätigungselementes die aufeinander gestapelten Segmente spaltfrei aufeinander angeordnet sind.

In einer weiteren möglichen Ausführungsform bilden die äußeren Ringelemente mehrerer axial nacheinander angeordneter Segmente die Innenwandung des äußeren Luftführungskanals. Darüber hinaus können die inneren Ringelemente mehrerer axial nacheinander angeordneter Segmente die Innenwandung des inneren Luftführungskanals bilden. Alternativ oder zusätzlich können die Segmente und somit die Scheibenelemente von einem im Wesentlichen kugelförmigen Segmentgehäuse umgeben sein, wobei die Scheibenelemente jeweils nur aus einem inneren Ringelement mit radial nach außen angeordneten Stegen oder aus einem äußeren und inneren Ringelement mit dazwischen radial angeordneten Stegen gebildet sein können.

Zur Ausrichtung der Strömung am Austritt des Luftausströmers ist der äußere Luftführungskanal von einem im Wesentlichen kugelförmigen Gehäuse umgeben, in welches der äußere Luftführungskanal, d.h. dessen umgebendes Segmentgehäuse oder dessen äußere, insbesondere kugelförmige Ringelemente, in Art eines Kugelgelenkes drehbar gelagert ist. Das kugelförmige Gehäuse des Luftausströmers bildet eine Kugelpfanne, in welche das kugelförmige Segmentgehäuse mit den darin angeordneten Segmenten bzw. die kugelförmigen Ringelemente ohne zusätzliches Gehäuse drehbar gelagert sind. Durch das außen auf das letzte Segment und gegebenenfalls auf das Segmentgehäuse aufgesetzte und auf diesem arretierbare Betätigungselement ist das Luftleitelement im kugelförmigen Gehäuse des Luftausströmers in mehreren Rotationsfreiheitsgraden verstellbar, indem das Betätigungselement sowohl radial als auch angular bewegbar ist und das Luftleitelement entsprechend im Gehäuse relativ zur Längsachse des Luftführungskanals verstellbar ist. Durch die radiale Verstellung ist eine beliebige Strömungsrichtung und/oder durch die angulare Verstellung eine beliebige Strömungsart für den Luftausströmer einstellbar.

In einer weiteren vorteilhaften Ausführungsform sind die Stege eben ausgebildet und zum Strömungsquerschnitt geneigt angeordnet. Alternativ können die Stege gewölbt ausgebildet und zum Strömungsquerschnitt senkrecht angeordnet sein. Auch können die Stege aus einem flexiblen, insbesondere elastischen Material gebildet sein, so dass diese durch Verdrehung gewunden werden können.

In einer Weiterbildung der Erfindung können mehrere gleichartige oder verschiedenartige Luftleftelemente axial hintereinander und/oder nebeneinander angeordnet sein. Bei einer parallel nebeneinander vorgesehenen Anordnung der Luftleitelemente ist der Luftausströmer als eine Doppeldüse ausgeführt. Bei mehreren axial hintereinander angeordneten Luftleitelementen und somit mehreren axial hintereinander angeordneten Schaufelkränzen ist insbesondere eine Einstellung der Segmente in Form einer Mehrfach-Helix ermöglicht. Zweckmäßigerweise sind die Luftleitelemente mittels separater Bedienelemente und/oder eines gemeinsamen Betätigungselementes asynchron bzw. synchron verstellbar. Auch können Klappen oder Lamellen oder andere geeignete Luftleitelemente vor und/oder hinter dem oder den Schaufelkränzen im Luftführungskanal angeordnet sein. Insbesondere ist das als innerer Luftführungskanal dienende, innere Ringelement mit einer Klappe versehen, welche den inneren Luftführungskanal zur Einstellung einer gerichteten Strömung vollständig schließt oder öffnet.

Vorzugsweise ist im Bereich des Luftleitelements zur Vergrößerung des Strömungsquerschnitts der Luftausströmer und somit dessen Luftführungskanal im Wesentlichen kugelförmig ausgeführt, wobei in diesen strömungseingangsseitig ein zylindrischer Luftführungskanal mündet.

Ausführungsbeispiele der Erfindung werden anhand einer Zeichnung näher erläutert. Darin zeigen:
- Fig. 1: schematisch in Explosionsdarstellung einen als Doppeldüse ausgebildeten Luftausströmer mit jeweils einem als Schaufelkranz ausgebildeten Luftleftelement, dessen axial hintereinander angeordnete Segmente relativ zueinander angular verstellbar sind,
- Fig. 2: schematisch den Schaufelkranz gemäß Figur 1 in perspektivischer Darstellung im zusammengebauten Zustand in der Stellung Modus "Diffus",
- Fig. 3: schematisch den Schaufelkranz im Schnitt III gemäß Figur 4,
- Fig. 4: schematisch den Schaufelkranz gemäß Figur 2 in Draufsicht im zusammengebauten Zustand in der Stellung Modus "Diffus",
- Fig. 5: schematisch den Schaufelkranz gemäß Figur 1 in perspektivischer Darstellung im zusammengebauten Zustand in der Stellung Modus "Gesamtluft",
- Fig. 6: schematisch den Schaufelkranz im Schnitt VI gemäß Figur 7,
- Fig. 7: schematisch den Schaufelkranz gemäß Figur 5 in Draufsicht im zusammengebauten Zustand in der Stellung Modus "Gesamtluft",
- Fig. 8: schematisch in perspektivischer Darstellung bei aufgeschnittenem Gehäuse ein darin auf einem inneren Ringelement angeordnetes Segment des Schaufelkranzes,
- Fig. 9: schematisch in perspektivischer Darstellung bei aufgeschnittenem Gehäuse ein auf das auf dem inneren Ringelement angeordneten Segment in axialer Richtung weiteres aufsetzbares Segment des Schaufelkranzes,
- Fig. 10: schematisch in perspektivischer Darstellung bei aufgeschnittenem Gehäuse zwei aufeinander gesetzte Segmente des Schaufelkranzes in der Stellung Modus "Diffus",
- Fig. 11: schematisch in perspektivischer Darstellung bei aufgeschnittenem Gehäuse zwei aufeinander gesetzte Segmente des Schaufelkranzes in einer Zwischenstellung zwischen der Stellung Modus "Diffus" und der Stellung Modus "Gesamtluft", und
- Fig. 12: schematisch im Längsschnitt eine Ausführungsform für einen Luftausströmer mit mehreren auf ein inneres Ringelement aufgesetzte Segmente, die von einem auf das strömungsausgangsseitig letzte Ringelement aufgesetztes Betätigungselement angular verstellbar sind.

Einander entsprechende Teile sind in allen Figuren mit den gleichen Bezugszeichen versehen.

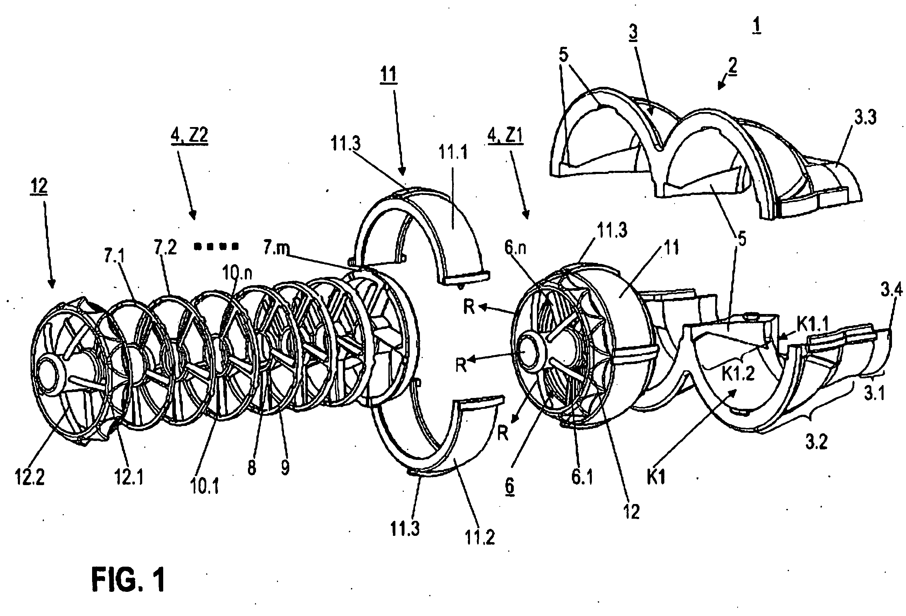

Figur 1 zeigt in Explosionsdarstellung einen als Doppeldüse 2 ausgebildeten Luftausströmer 1. Alternativ kann der Luftausströmer 1 in nicht näher dargestellter Form auch als eine Einfachdüse ausgebildet sein. Nachfolgend wird die Erfindung anhand des Aufbaus einer der Düsen näher beschrieben.

Der Luftausströmer 1 weist je Düse einen Luftführungskanal K1 auf, der strömungseingangsseitig einen hohlzylindrischen Abschnitt K1.1 und strömungsausgangsseitig einen kugelförmigen Abschnitt K1.2 aufweist. Darüber hinaus weist der Luftausströmer 1 ein Gehäuse 3 auf, das in Analogie zur Form des Luftführungskanals K1 strömungseingangsseitig einen hohlzylindrischen Abschnitt 3.1 und strömungsausgangsseitig einen kugelförmigen Abschnitt 3.2 aufweist. Das Gehäuse 3 ist beispielsweise aus zwei Halbschalen 3.3 und 3.4 gebildet. Das Gehäuse 3 kann beispielsweise aus einem Kunststoffformteil oder einem anderen geeigneten Material gebildet sein.

Im kugelförmigen Abschnitt K1.2 des Luftführungskanals K1 und somit des kugelförmigen Abschnitts 3.2 des Gehäuses 3 ist ein Luftleitelement 4 zur Einstellung von verschiedenen Strömungsarten und/oder Strömungsrichtungen R angeordnet. Dabei weist das Luftleitelement 4 in der Außenkontur im Wesentlichen eine Kugelform auf und ist in Art eines Kugelgelenkes im kugelförmigen Abschnitt 3.2 des Gehäuses 3 drehbar gelagert. Der Luftausströmer 1 wird daher auch als Kugeldüse bezeichnet.

Zur Verstellung der Strömungsrichtung R des Luftausströmers 1 sind innenseitig in die jeweilige Halbschale 3.3 und 3.4 Führungssicken 5 eingebracht.

Je nach Vorgabe der einstellbaren Freiheitsgrade ist eine entsprechende Anzahl von Führungssicken 5 eingebracht. Durch transiatorisches Bewegen des Luftleitelements 3 nach oben, nach unten oder zur Seite und/oder durch eine Drehbewegung wird strömungsausgangsseitig des Luftausströmers 1 eine entsprechende Strömungsrichtung R bzw. Strömungsart - Diffusströmung oder gerichtete Strömung - am Luftausströmer 1 eingestellt.

Das Luftleitelement 4 ist in der Figur 1 sowohl im zusammengebauten Zustand Z1 als auch zur besseren Darstellung des Aufbaus des Luftleitelements 4 im auseinander genommenen Zustand Z2 gezeigt.

Das Luftleüelement 3 ist in Art eines Schaufelkranzes 6 mit einer vorgegebenen Anzahl von Schaufeln 6.1 bis 6.n ausgeführt. Dabei ist der Schaufelkranz 6 und somit jede der Schaufeln 6.1 bis 6.n aus einer vorgegebenen Anzahl von axial hintereinander angeordneten Segmenten 7.1 bis 7.m gebildet. Das jeweilige Segment 7.1 bis 7.m ist als ein Scheibenelement ausgeführt, welches im Ausführungsbeispiel nach Figur 1 ein inneres Ringelement 8 und ein um diesen konzentrisch angeordnetes, äußeres Ringelement 9 aufinreist, zwischen denen eine vorgegebene Anzahl von Stegen 10.1 bis 10.n radial angeordnet ist. Dabei kann das innere Ringelement 8 zusätzlichen einen inneren Luftführungskanal K2 bilden. Darüber hinaus entspricht die Anzahl der Stege 10.1 bis 10.n eines Segmentes 7.1 bis 7.m der Anzahl der Schaufeln 6.1 bis 6.n. In einer alternativen, nicht näher dargestellten Ausführungsform können die Segmente 7.1 bis 7.m jeweils aus einem inneren Ringelement 8, auf welchem radial nach außen weisende Stege 10.1 bis 10.n angeordnet sind, gebildet sein.

Die Segmente 7.1 bis 7.m können, wie in Figur 1 dargestellt, von einem Segmentgehäuse 11 umgeben sein, in welchem die Segmente 7.1 bis 7.m zumindest relativ zueinander angular verstellbar sind. Das Segmentgehäuse 11 ist für eine einfache Montage mehrteilig ausgeführt, insbesondere zweischalig aus einer ersten Halbschale 11.1 und einer zweiten Halbschale 11.2 gebildet, die aufeinander steckbar sind. Das Segmentgehäuse 11 ist mit nach außen abstehenden Führungsstegen 11.3 versehen, die in den Führungssicken 5 des Gehäuses 3 geführt sind und zur Einstellung der Strömungsrichtung R durch Verstellung des Luftleitelements 4 dienen.

Zur Einstellung der Strömungsart - Modus "Diffus" und Modus "Gesamtluft" bzw. eine Zwischenstellung - ist ein Betätigungselement 12 in Form Verstellringes mittig auf das axial in Strömungsrichtung R letzte Segment 7.1 aufsetzbar. Die axial hintereinander und miteinander verbindbaren Segmente 7.1 bis 7.m sind durch Verstellen, insbesondere Verdrehen des letzten Segmentes 7.1 mittels des Betätigungselementes 12 dabei relativ zueinander angular verstellbar, so dass im Modus "Diffus" eine fächerartige Luftleftfläche und im Modus "Gesamtluft" eine weitgehend geradlinige Luftleitfläche gebildet ist.

Für eine Fixierung des Betätigungselementes 12 am letzten Segment 7.1 kann das Betätigungselement 12 beispielsweise in nicht näher dargestellter Art und Weise mit Stiften versehen sein, die in Ausnehmungen des letzten Segmentes 7.1 eingreifen und in diesen zur Vermeidung einer Verkantung arretierbar sind. Darüber hinaus weist das Betätigungselement 12 strömungsausgangsseitig einen geformten Rand 12.1 auf, der beispielsweise mit einer entsprechenden Struktur, z.B. Greifstruktur, versehen ist. Zusätzlich kann das Betätigungselement 12 strömungsausgangsseitig mit festen oder verstellbaren Streben 12.2 oder Lamellen versehen sein.

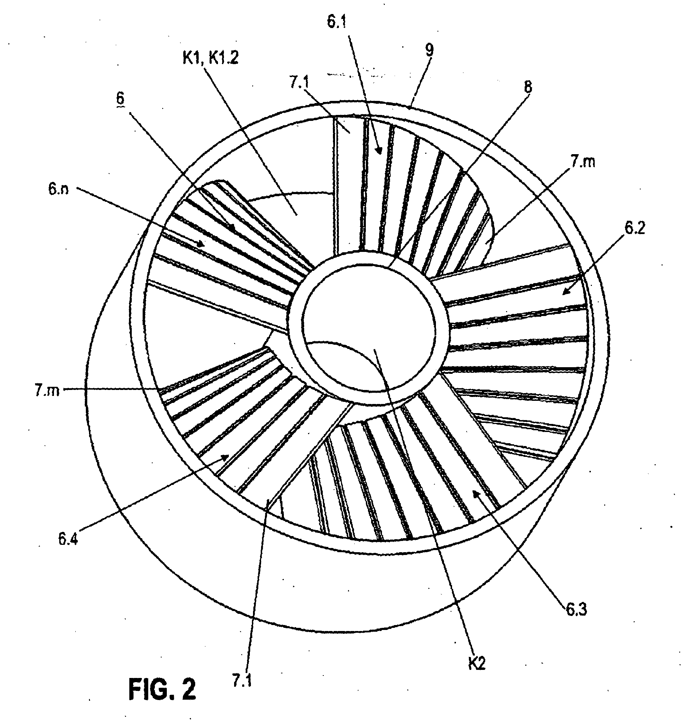

Figur 2 zeigt schematisch den Schaufelkranz 6 gemäß Figur 1 in perspektivischer Darstellung im zusammengebauten Zustand in der Stellung Modus "Diffus". In dieser Endstellung sind die Segmente 7.1 bis 7.m der jeweiligen Schaufel 6.1 bis 6.n derart angular verstellt, dass sich eine fächerartige oder helixförmige Luftleitfläche in Strömungsrichtung R zur Erzielung einer Drallströmung bildet.

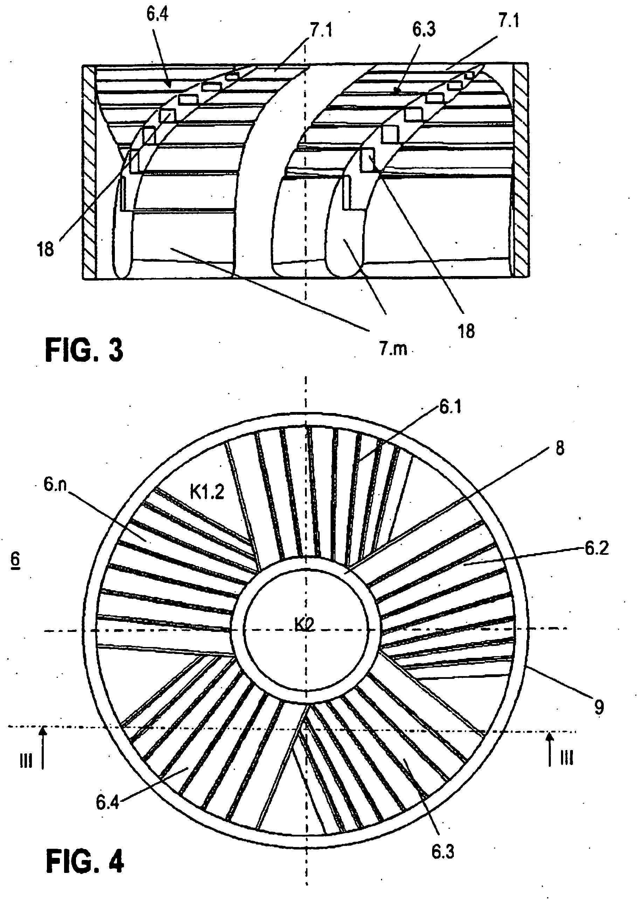

Figur 3 zeigt schematisch den Schaufelkranz 6 im zusammengebauten Zustand mit den in der Stellung Modus "Diffus" positionierten Segmenten 7.1 bis 7.m der jeweiligen Schaufel 6.1 bis 6.n im Schnitt III gemäß Figur 4. Figur 4 zeigt schematisch den Schaufelkranz 6 gemäß Figur 2 in Draufsicht mit den in der Stellung Modus "Diffus" positionierten Segmenten 7.1 bis 7.m.

Dabei verringern die Segmente 7.1 bis 7.m der Schaufeln 6.1 bis 6.n den Strömungsquerschnitt maximal bei maximaler Verdrallung des Luftstroms durch die fächerartige Luftleitfläche der jeweiligen Schaufel 6.1 bis 6.n. Die in der Stellung "Diffus" durch die Ausgestaltung der Segmente 7.1 bis 7.m entstehenden Hohlräume 18 werden beim Übergang auf die Stellung "Gesamt" verkleinert bzw. verschwinden in vollständig ineinander geschachtelter Stellung der Segmente 7.1 bis 7.m.

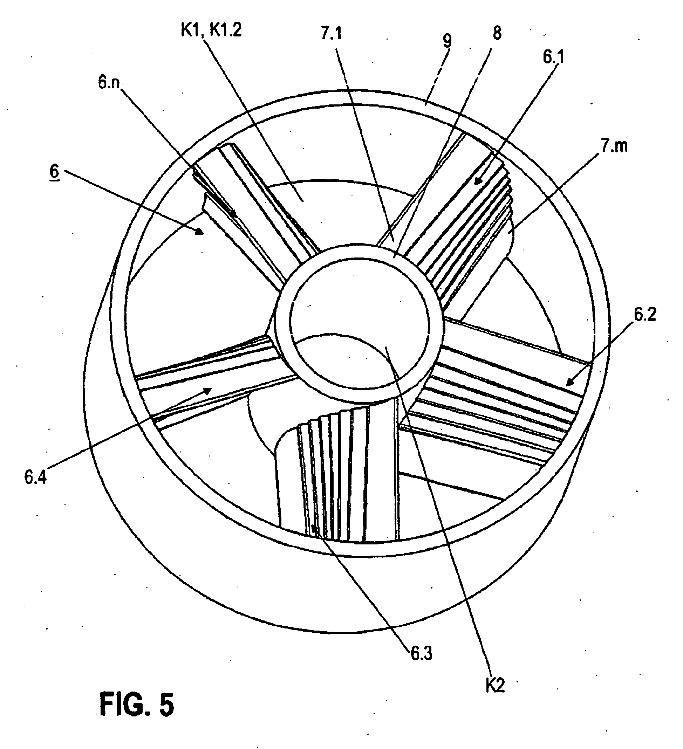

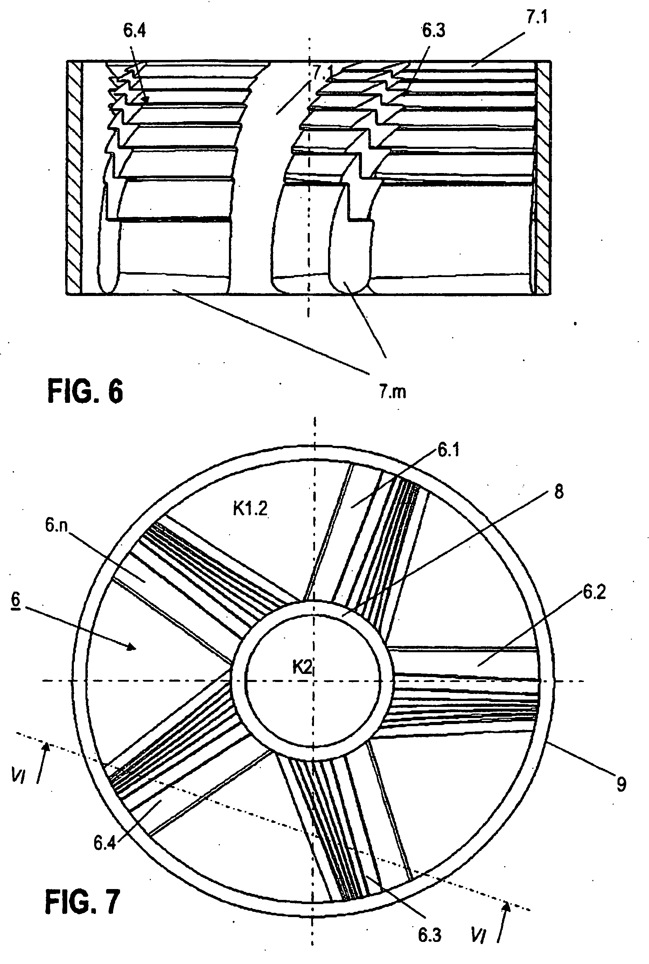

Figur 5 zeigt schematisch den Schaufelkranz 6 gemäß Figur 1 in perspektivischer Darstellung im zusammengebauten Zustand mit den in der Stellung Modus "Gesamtluft" positionierten Segmenten 7.1 bis 7.m. In Figur 6 ist der Schaufelkranz 6 im Schnitt VI gemäß Figur 7 dargestellt und Figur 7 zeigt den Schaufelkranz 6 gemäß Figur 5 in Draufsicht mit den in der Stellung Modus "Gesamtluft" positionierten Segmenten 7.1 bis 7.m. Dabei verringern die Segmente 7.1 bis 7.m der Schaufeln 6.1 bis 6.n den Strömungsquerschnitt minimal bei minimaler Verdrallung des Luftstroms, so dass sich eine weitgehend gerichtete Strömung im äußeren Luftführungskanal K1.2 ergibt. In dieser Stellung sind die Segmente 7.1 bis 7.m in Strömungsrichtung R weitgehend senkrecht übereinander angeordnet, so dass sich eine weitgehend geradlinige Luftleitfläche für die jeweilige Schaufel 6.1 bis 6.n ergibt.

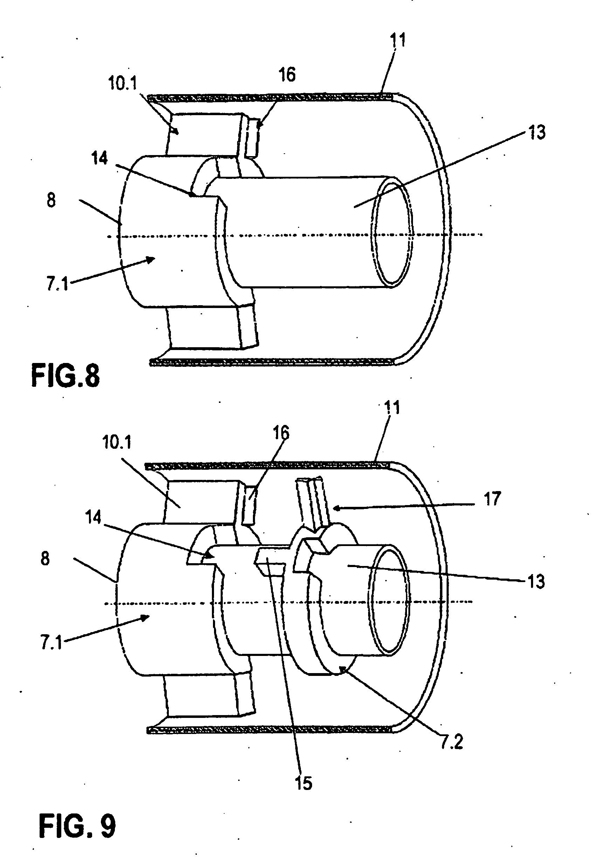

Figur 8 zeigt schematisch in perspektivischer Darstellung bei aufgeschnittenem Segmentgehäuse 11 ein Ausführungsbeispiel für ein im Segmentgehäuse 11 angeordnetes Segment 7.1 mit einem inneren Ringelement 8 und radial nach außen weisenden Stegen 10.1 bis 10.n. Das Segmentgehäuse 11 kann dabei mit den darin angeordneten Segmenten 7.1 bis 7.m als ein integriertes Bauteil, z. B. ein Spritzformteil, ausgeführt sein, dass in das als Kugelgelenk dienende Gehäuse 3 des Luftausströmers 1 beweglich gelagert ist.

Das innere Ringelement 8 ist in diesem Beispiel auf einen als innerer Luftführungskanal K2 dienender Hohlzylinder 13 angeordnet. Für eine Verbindung der axial hintereinander angeordneten Segmente 7.1 bis 7.m weist das jeweilige Segment 7.1 bis 7.m eine Ausnehmung 14 auf. In diese Ausnehmung 14 greift ein Stift 15 eines axial in Strömungsrichtung R nachfolgenden inneren Ringelementes 7.2 ein, wie in Figur 9 dargestellt. Dabei dienen die Wände der Ausnehmung 14 als Anschläge für die den Modus "Diffus" bewirkenden Stellung und die den Modus "Gesamtluft" bewirkenden Stellung.

Alternativ oder zusätzlich können die zueinander korrespondierenden Stege 10.1 bis 10.n einer jeweiligen Schaufel 6.1 bis 6.n von axial angrenzenden Segmenten 7.1 bis 7.m mit zueinander korrespondierenden Anschlägen 16 und 17, wie in den Figuren 8 und 9 gezeigt, versehen sein.

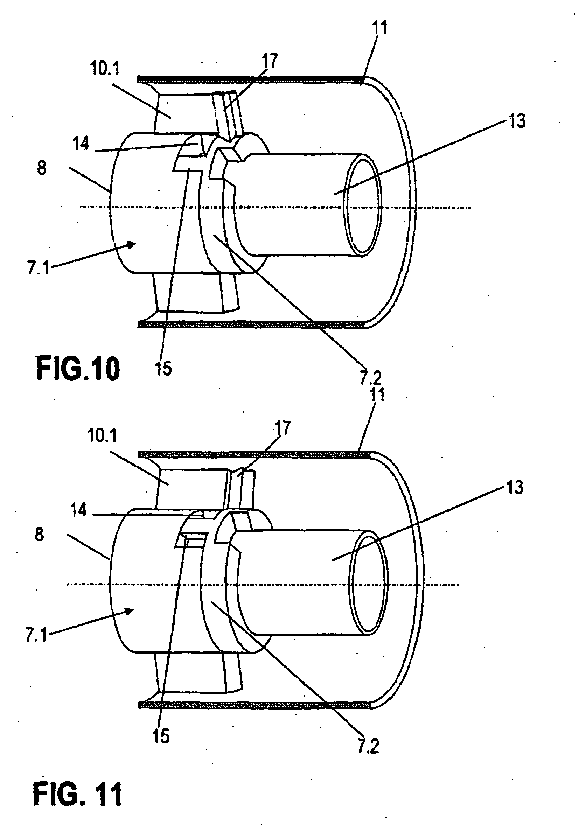

Figur 10 zeigt in perspektivischer Darstellung bei aufgeschnittenem Segmentgehäuse 11 zwei aufeinander gesetzte Segmente 7.1 und 7.2 des Schaufelkranzes 6 in der Stellung Modus "Diffus" und Figur 11 zwei aufeinander gesetzte Segmente 7.1 und 7.2 in einer Zwischenstellung zwischen der Stellung Modus "Diffus" und der Stellung Modus "Gesamtluft".

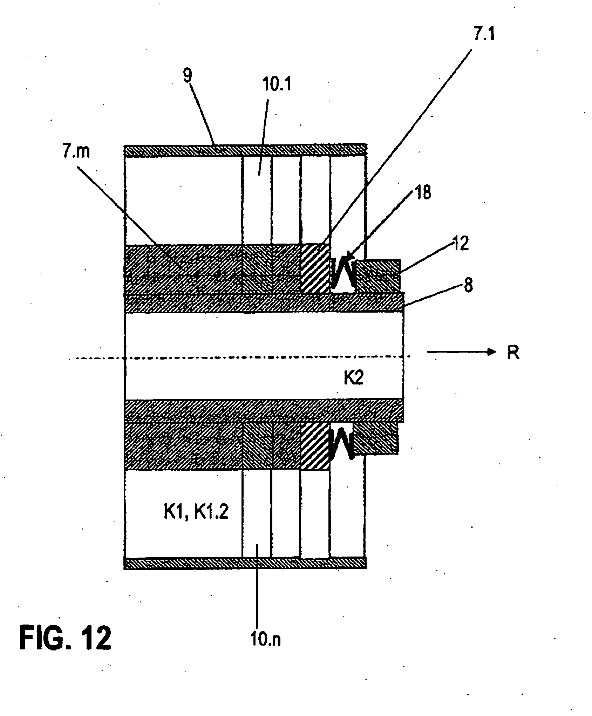

Figur 12 zeigt eine weitere Ausführungsform für das Luftleitelement 4 im Längsschnitt mit mehreren auf einen, einen inneren Luftführungskanal K2 bildenden Hohlzylinder 13 axial aufeinander gesetzten Segmenten 7.1 bis 7.m, die von einem auf das strömungsausgangsseitig letzte Segment 7.1 aufgesetztes Betätigungselement 12 angular verstellbar sind. Dabei ist zwischen dem letzten Segment 7.1 und dem Betätigungselement 12 ein Federelement 18 angeordnet, welches die Segmente 7.1 bis 7.m bei arretiertem Betätigungselement 12 in axialer Richtung weitgehend spaltfrei zusammendrückt, so dass bei angularer Verstellung der Segmente 7.1 bis 7.m die Stege 10.1 bis 10.n von aneinander angrenzenden Segmenten 7.1 bis 7.m eine weitgehend luftdichte Luftleitfläche bilden.

Je nach Vorgabe können die Stege 10.1 bis 10.n eben ausgebildet und zum Strömungsquerschnitt geneigt angeordnet sein. Alternativ können die Stege 10.1 bis 10.n gewölbt und senkrecht zum Strömungsquerschnitt angeordnet sein. Darüber hinaus können die Stege 10.1 bis 10.n starr oder flexibel ausgebildet sein. Bei einer flexiblen, insbesondere elastischen Ausbildung können die Stege 10.1 bis 10.n zur Einstellung einer fächerartigen oder helixförmigen Luftleitfläche gewunden werden.

## Patentansprüche

1. Luftausströmer (1) zum Ausströmen eines Luftstroms, insbesondere in einen Fahrzeuginnenraum, mit mindestens einem Luftführungskanal (K1) und mindestens einem darin angeordneten Luftleitelement (4) in der Art eines Schaufelkranzes (6) mit mindestens einer Schaufel (6.1 bis 6.n), wobei jede der Schaufeln (6.1 bis 6.n) aus mindestens zwei axial hintereinander angeordneten Segmenten (7.1 bis 7.m) gebildet ist, die zwischen einer einen Modus "Diffus" bewirkenden Stellung und einer einen Modus "Gesamtluft" bewirkenden Stellung mit einem axial variabel einstellbaren Strömungsquerschnitt des Luftführungskanals (K1) zumindest relativ zueinander angular verstellbar sind, wobei die Segmente (7.1 bis 7.m) jeweils als ein Scheibenelement ausgebildet sind, welches aus mindestens einem inneren Ringelement (8) gebildet ist, das eine der Anzahl der Schaufeln (6.1 bis 6.n) entsprechende Anzahl von radial nach außen weisenden Stegen (10.1 bis 10.n) aufweist, **dadurch gekennzeichnet, dass** das jeweilige innere Ringelement (8) mit einer Ausnehmung (14) versehen ist, in welche ein Stift (15) des inneren Ringelementes (8) des axial in Strömungsrichtung nachfolgenden Segmentes (7.1 bis 7.m) eingreift und zwischen der den Modus "Diffus" bewirkenden Stellung und der den Modus "Gesamtluft" bewirkenden Stellung angular verstellbar ist

2. Luftausströmer nach Anspruch 1, wobei die Segmente (7.1 bis 7.m) zwischen der den Modus "Diffus" bewirkenden Stellung, in der sie den Strömungsquerschnitt bei maximaler Verdrallung des Luftstroms maximal verringern und der den Modus "Gesamtluft" bewirkenden Stellung, in der sie den Strömungsquerschnitt bei minimaler Verdrallung des Luftstroms minimal verringern, zumindest relativ zueinander angular verstellbar sind.

3. Luftausströmer nach Anspruch 1 oder 2, wobei die Segmente (7.1 bis 7.m) jeweils einer Schaufel (6.1 bis 6.n) derart zueinander angular verstellbar sind, dass sich eine fächerartige Luftleitfläche in Strömungsrichtung bildet.

4. Luftausströmer nach einem der Ansprüche 1 bis 3, wobei die Segmente (7.1 bis 7.m) konzentrisch um die Längsachse des Luftausströmers (1) gelagert sind.

5. Luftausströmer nach einem der Ansprüche 1 bis 4, wobei der Luftführungskanal (K1) als ein Ringkanal ausgebildet ist der einen weiteren, Inneren Luftführungskanal (K2) umgibt und parallel zu diesem verläuft.

6. Luftausströmer nach Anspruch 5, wobei die beiden Luftführungskanäle (K1, K2) zylindrisch und koaxial ausgebildet sind.

7. Luftausströmer nach Anspruch 5 oder 6, wobei die Segmente (7.1 bis 7.m) konzentrisch um den inneren Luftführungskanal (K2) gelagert sind.

8. Luftausströmer nach einem der Ansprüche 1 bis 7, wobei das jeweilige Scheibenelement aus einem inneren Ringelement (8) und einem konzentrisch um dieses angeordneten äußeren Ringelement (9) gebildet ist, zwischen denen mindestens ein Steg (10.1 bis 10.n) angeordnet ist.

9. Luftausströmer nach einem der Ansprüche 1 bis 8, wobei die axial in Strömungsrichtung (R) aufeinander gesetzten Segmente (7.1 bis 7.m) mittels eines Betätigungselementes (12) synchron verstellbar, insbesondere verdrehbar sind.

10. Luftausströmer nach Anspruch 9, wobei das Betätigungselement (12) mittig auf das axial in Strömungsrichtung (R) letzte Segment (7.1) aufsetzbar ist.

11. Luftausströmer nach Anspruch 9 oder 10, wobei das Betätigungselement (12) als ein Betätigungsring ausgebildet ist.

12. Luftausströmer nach einem der Ansprüche 8 bis 11, wobei die äußeren Ringelemente (9) mehrerer axial nacheinander angeordneter Segmente (7.1 bis 7.m) die Innenwandung des äußerten Luftführungskanals (K1) bilden.

13. Luftausströmer nach einem der Ansprüche 1 bis 12 wobei die inneren Ringelemente (8) mehrerer axial nacheinander angeordneter Segmente (7.1 bis 7.m) die innenwandung des inneren Luftführungskanals (K2) bilden.

14. Luftausströmer nach einem der Ansprüche 1 bis 13, wobei die Segmente (7.1 bis 7.m) von einem im Wesentlichen kugelförmigen Segmentgehäuse (11) umgeben sind.

15. Luftausströmer nach einem der Ansprüche 1 bis 14, wobei ein im Wesentlichen kugelförmiges Gehäuse (3) vorgesehen ist, in welches ein den äußeren Luftführungskanal (K1) umgebendes Segmentgehäuse (11) oder äußere, insbesondere kugelförmigen den äußeren Luftführungskanal (K1) bildende Ringelemente (9) in Art eines Kugelgelenkes drehbar gelagert sind.

16. Luftausströmer nach einem der Ansprüche 1 bis 15, wobei die Stege (10.1 bis 10.n) eben ausgebildet und zum Strömungsquerschnitt geneigt angeordnet sind.

17. Luftausströmer nach einem der Ansprüche 1 bis 16, wobei die Stege (10.1 bis 10.n) gewölbt ausgebildet und zum Strömungsquerschnitt senkrecht angeordnet sind.

18. Luftausströmer nach einem der Ansprüche 1 bis 17, wobei mehrere gleichartige oder verschiedenartige Luftleitelemente (4) axial hintereinander und/oder nebeneinander angeordnet sind.

19. Luftausströmer nach Anspruch 18, wobei die Luftleitelemente (4) mittels separater Bedienelemente und/oder eines gemeinsamen Betätigungselementes (12) asynchron bzw. synchron verstellbar sind.

## Claims

1. Air discharger (1) for the outflow of an air flow, especially in a vehicle interior space, with at least one air guiding channel (K1) and at least one air guide element (4) arranged therein in the manner of a blade ring (6) with at least one blade (6.1 to 6.n), wherein each of the blades (6.1 to 6.n) is formed of at least two segments (7.1 to 7.m) arranged axially in succession, which can be at least adjusted angularly relative to one another between a position effecting a mode "diffusion" and a position effecting a mode "total air" with an axially variably adjustable flow cross section of the air guiding channel (K1), wherein the segments (7.1 to 7.m) are respectively formed as a disc element, which is formed of at least one inner ring element (8), which has number of radially outwardly pointing webs (10.1 to 10.n) corresponding to the number of blades (6.1 to 6.n), **characterised in that** the respective inner ring element (8) is provided with a recess, in which engages a pin (15) of the inner ring element (8) of the segment (7.1 to 7.m) following axially in the flow direction, and can be adjusted angularly between the position effecting the mode "diffusion" and the position effecting the mode "total air".

2. Air discharger according to claim 1, wherein the segments (7.1 to 7.m) can be adjusted angularly at least relative to one another between the position effecting the mode "diffusion", in which they reduce the flow cross section with a maximum swirl of the air flow to a maximum, and the position effecting the mode "total air", in which they reduce the flow cross section with a minimal swirl of the air flow to a minimum.

3. Air discharger according to claim 1 or 2, wherein the segments (7.1 to 7.m) of respectively one blade (6.1 to 6.n) can be adjusted angularly to one another in such a manner that a fan-shaped air guide surface forms in the flow direction.

4. Air discharger according to one one of claims 1 to 3, wherein the segments (7.1 are mounted concentrically around the longitudinal axis of the air discharger (1).

5. Air discharger according to one one of claims 1 to 4, wherein the air guiding channel (K1) is formed as an annular channel which surrounds a further inner air guiding channel (K2) and proceeds parallel thereto.

6. Air discharger according to claim 5, wherein the two air guiding channels (K1, K2) are formed in a cylindrical and coaxial manner.

7. Air discharger according to claims 5 or 6, wherein the segments (7.1 bis 7.m) are mounted concentrically around the inner air guiding channel (K2).

8. Air discharger according to one of claims 1 to 7, wherein the respective disc element is formed of an inner ring element (8) and an outer ring element (9) arranged concentrically around this, between which is arranged at least one web (10.1 to 10.n).

9. Air discharger according to one of claims 1 to 8, wherein the the segments (7.1 to 7.m) placed on top of one another in the flow direction (R) can be adjusted synchronously, especially rotatably by means of an actuation element (12).

10. Air discharger according to claim 9, wherein the actuation element (12) can be placed centrally on the last segment (7.1) axially in the flow direction (R).

11. Air discharger according to claim 9 or 10, wherein the actuation element (12) is formed as an actuation ring.

12. Air discharger according to one of claims 8 to 11, wherein the outer ring elements (9) of several axially successively arranged segments (7.1 to 7.m) form the inner wall of the outer air guiding channel (K1).

13. Air discharger according to one of claims 1 to 12, wherein the inner ring elements (8) of several axially successively arranged segments (7.1 to 7.m) form the inner wall of the inner air guiding channel (K2).

14. Air discharger according to one of claims 1 to 13, wherein the segments (7.1 to 7.m) are surrounded by an essentially spherical segment housing (11).

15. Air discharger according to one of claims 1 to 14, wherein an essentially spherical housing (3) is provided, in which are mounted a segment housing (11) surrounding the outer air guiding channel (K1) or outer, especially spherical ring elements (9) forming the outer air guiding channel (K1) in the manner of a spherical joint in a rotatable manner.

16. Air discharger according to one of claims 1 to 15, wherein the webs (10.1 to 10.n) are formed in a planar manner and are arranged obliquely to the flow cross section.

17. Air discharger according to one of claims 1 to 16, wherein the webs (10.1 to 10.n) are formed in a curved manner and are arranged vertically to the flow cross section.

18. Air discharger according to one of claims 1 to 17, wherein several similar or different air guide elements (4) are arranged axially in succession and/or adjacent to one another.

19. Air discharger according to claim 18, wherein the air guide elements (4) can be adjusted asynchronously or synchronously by means of separate operating elements and/or a common actuation element (12).

## Revendications

1. Diffuseur d'air (1) servant à l'écoulement d'un flux d'air, en particulier dans l'habitacle d'un véhicule automobile, comprenant au moins un conduit de guidage d'air (K1) et au moins un élément déflecteur d'air (4) disposé à l'intérieur de celui-ci et monté à la façon d'une couronne de pales (6) comprenant au moins une pale (6.1 à 6.n), où chacune des pales (6.1 à 6.n) est formée par au moins deux segments (7.1 à 7.m) disposés axialement les uns derrière les autres, segments qui sont au moins mobiles de façon angulaire, les uns par rapport aux autres, en ayant une section d'écoulement du conduit de guidage d'air (K1) réglable de façon variable, axialement, entre une position déclenchant un mode "diffus" et une position déclenchant un mode "air total", où les segments (7.1 à 7.m) sont configurés à chaque fois comme un élément de disque qui est formé par au moins un élément annulaire intérieur (8) qui présente un nombre de parties pleines (10.1 à 10.n) pointant vers l'extérieur, dans le sens radial, et correspondant au nombre des pales (6.1 à 6.n),
**caractérisé en ce que** l'élément annulaire intérieur respectif (8) est doté d'un évidement (14) dans lequel s'engage un tenon (15) de l'élément annulaire intérieur (8) du segment (7.1 à 7.m) qui suit axialement dans la direction d'écoulement, et est mobile de façon angulaire, entre la position déclenchant le mode "diffus" et la position déclenchant le mode "air total".

2. Diffuseur d'air selon la revendication 1, où les segments (7.1 à 7.m) sont au moins mobiles de façon angulaire, les uns par rapport aux autres, entre la position déclenchant le mode "diffus" dans laquelle ils diminuent au maximum la section d'écoulement en cas de tourbillonnement maximum du flux d'air, et la position déclenchant le mode "air total" dans laquelle ils diminuent au minimum la section d'écoulement en cas de tourbillonnement minimum du flux d'air.

3. Diffuseur d'air selon la revendication 1 ou 2, où les segments (7.1 à 7.m) respectivement d'une pale (6.1 à 6.n) sont mobiles de façon angulaire, les uns par rapport aux autres, de manière telle qu'il se forme, dans la direction d'écoulement, une surface de déflection d'air en forme d'éventail.

4. Diffuseur d'air selon l'une quelconque des revendications 1 à 3, où les segments (7.1 à 7.m) sont logés de façon concentrique autour de l'axe longitudinal du diffuseur d'air (1).

5. Diffuseur d'air selon l'une quelconque des revendications 1 à 4, où le conduit de guidage d'air (K1) est configuré comme un conduit annulaire qui entoure un autre conduit de guidage d'air intérieur (K2) et s'étend parallèlement à celui-ci.

6. Diffuseur d'air selon la revendication 5, où les deux conduits de guidage d'air (K1, K2) sont configurés de façon cylindrique et coaxiale.

7. Diffuseur d'air selon la revendication 5 ou 6, où les segments (7.1 à 7.m) sont logés de façon concentrique autour du conduit de guidage d'air intérieur (K2).

8. Diffuseur d'air selon l'une quelconque des revendications 1 à 7, où l'élément de disque respectif est formé par un élément annulaire intérieur (8) et par un élément annulaire extérieur (9) disposé de façon concentrique autour de cet élément annulaire intérieur, éléments annulaires entre lesquels est disposée au moins une partie pleine (10.1 à 10.n).

9. Diffuseur d'air selon l'une quelconque des revendications 1 à 8, où les segments (7.1 à 7.m) placés les uns sur les autres, axialement dans la direction d'écoulement (R), peuvent être déplacés, en particulier tournés, de façon synchrone, au moyen d'un élément de commande (12).

10. Diffuseur d'air selon la revendication 9, où l'élément de commande (12) peut être placé au milieu, sur le dernier segment (7.1), axialement dans la direction d'écoulement (R).

11. Diffuseur d'air selon la revendication 9 ou 10, où l'élément de commande (12) est configuré comme un anneau de commande.

12. Diffuseur d'air selon l'une quelconque des revendications 8 à 11, où les éléments annulaires extérieurs (9) de plusieurs segments (7.1 à 7.m) disposés axialement les uns derrière les autres forment la paroi intérieure du conduit de guidage d'air extérieur (K1).

13. Diffuseur d'air selon l'une quelconque des revendications 1 à 12, où les éléments annulaires intérieurs (8) de plusieurs segments (7.1 à 7.m) disposés axialement les uns derrière les autres forment la paroi intérieure du conduit de guidage d'air intérieur (K2).

14. Diffuseur d'air selon l'une quelconque des revendications 1 à 13, où les segments (7.1 à 7.m) sont entourés par un carter de segment (11) sensiblement de forme sphérique.

15. Diffuseur d'air selon l'une quelconque des revendications 1 à 14, où il est prévu un carter (3) sensiblement de forme sphérique, carter dans lequel sont montés en rotation, à la façon d'un joint à rotule, un carter de segment (11) entourant le conduit de guidage d'air extérieur (K1), ou bien des éléments annulaires extérieurs (9), en particulier de forme sphérique, formant le conduit de guidage d'air extérieur (K1).

16. Diffuseur d'air selon l'une quelconque des revendications 1 à 15, où les parties pleines (10.1 à 10.n) sont configurées de façon plane et disposées en étant inclinées par rapport à la section d'écoulement.

17. Diffuseur d'air selon l'une quelconque des revendications 1 à 16, où les parties pleines (10.1 à 10.n) sont configurées de façon bombée et disposées perpendiculairement à la section d'écoulement.

18. Diffuseur d'air selon l'une quelconque des revendications 1 à 17, où plusieurs éléments déflecteurs d'air (4) identiques ou différents sont disposés axialement les uns derrière les autres et / ou les uns à côté des autres.

19. Diffuseur d'air selon la revendication 18, où les éléments déflecteurs d'air (4) sont mobiles de façon asynchrone ou synchrone, au moyen d'éléments de commande séparés et / ou d'un élément de commande commun (12).
